# EUROPEAN PATENT SPECIFICATION

(11) **EP 3 721 120 B1**
(45) Date of publication and mention of the grant of the patent: **25.01.2023**
(21) Application number: 18821753.3
(22) Date of filing: 03.12.2018
(51) Int. Cl.: F16H 61/662, F16H 63/06, F16H 9/18, F16H 55/56

(54) **CONTINUOUS VARIATION TRANSMISSION DEVICE WITH ADJUSTMENT DEVICE**
ÜBERTRAGUNGSVORRICHTUNG MIT KONTINUIERLICHER VARIATION UND EINSTELLVORRICHTUNG
DISPOSITIF DE TRANSMISSION À VARIATION CONTINUE AVEC DISPOSITIF DE RÉGLAGE

(30) Priority: 05.12.2017 IT 201700140043
(43) Date of publication of application: 14.10.2020
(73) Proprietor: Piaggio & C. SpA, 56025 Pontedera (IT)
(72) Inventor: NESTI, Paolo, 56025 Pontedera Pisa (IT); MARIOTTI, Walter, 56025 Pontedera Pisa (IT); FRESCHI, Giacomo, 56025 Pontedera Pisa (IT)
(74) Representative: Pulieri, Gianluca Antonio
(86) International application number: PCT/IB2018/059576
(87) International publication number: WO 2019/111131

(56) References cited:
- EP-A1- 2 767 736
- EP-A2- 1 223 366
- WO-A1-2004/094874
- WO-A1-2009/096385
- WO-A1-2014/115384
- WO-A1-2017/098379
- JP-A- H08 178 004

## Description

The present invention relates to a transmission system, in particular a transmission system for motorcycles of the continuous variation type, provided with a device for varying the change curve.

The term "motorcycles" in this document means a tilting or non-tilting two, three or four-wheel vehicle, such as the vehicle Vespa^{®}, Ape^{®} o MP3^{®} sold by the Applicant. The expandable-pulley and V-belt continuously variable gearbox (or CVT, Continuously Variable Transmission) is a type of automatic gearbox for vehicles in which the gear ratio may continuously vary between two limit values. The continuously variable gearbox is commonly used in vehicles with small and medium-sized cylinder capacity, in particular in motor scooters.

The variation of the gear ratio in a traditional CVT occurs by varying the winding diameters of the belt on two pulleys, one of which is motor and the other is driven, and at least one of which has the possibility of juxtaposing or moving away the two parts or semi-pulleys it is formed by.

Typically, the drive pulley comprises a speed controller made with centrifugal masses, generally referred to as "rollers", aiming at axially juxtaposing the respective semi-pulleys, passing from the low gear condition (distant semi-pulleys) to the high gear condition (juxtaposed semi-pulleys).

Therefore, once the physical and geometrical features of the system are set in a traditional CVT, the gear ratio depends on the number of engine revolutions and on the torque required.

The need exists to provide a CVT transmission system in which the change curve may be significantly modified according to the torque need required by the driver.

In other words, the need exists to provide a CVT transmission system which for example, if the driver suddenly requests more or less torque starting from a given condition, adapts and meets such a request.

International Applications WO-A1-2017/098378, WO-A1-2017/098379, WO-A1-2017/098381 and International Application PCT/IB2017/055668 to the Applicant, already deal with such a need and disclose related solutions.

However, the solutions of the prior art have shown the drawback of a sometimes significant noisiness. It is the object of the present invention to improve the known solutions by overcoming the drawback mentioned above.

Such an object is achieved by a transmission device manufactured according to claim 1. The dependent claims describe constructional variants.

The features and advantages of the transmission device according to the invention will become apparent from the following description, given by way of non-limiting example, according to the accompanying drawings, in which:

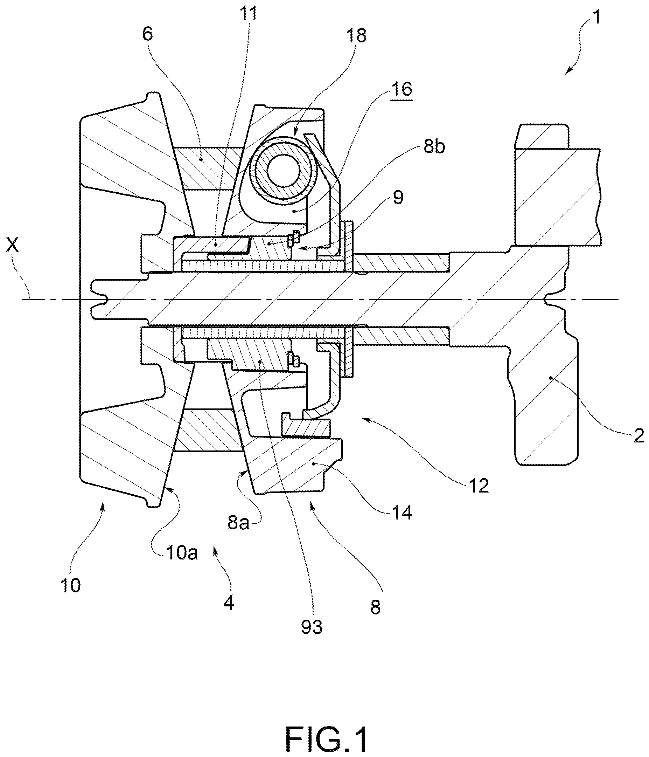

- figure 1 shows a longitudinal cross-section of a transmission device according to one embodiment of the present invention;
- figure 2 depicts a partial sectional view of a pulley of the transmission device in figure 1, in a low gear configuration;
- figure 3 depicts an assembly in the low gear configuration comprising a fixed bushing and a movable bushing of the device according to the invention, according to one embodiment;
- figure 4 depicts a partial sectional view of the pulley in figure 2, in a high gear configuration;
- figure 5 depicts the fixed bushing-movable bushing assembly in figure 3, in the high gear configuration;
- figure 6 shows a sectional view of the assembly in figure 5, according to a sectional plane orthogonal to the rotation axis;
- figure 7 depicts an enlargement of an area of the cross-section in figure 6; and
- figure 8 is a graph depicting the engine revolutions of a drive pulley and of a driven pulley, for a traditional CVT system and for a CVT system according to the present invention.

With reference to the accompanying drawings, 1 indicates a continuous variation transmission device as a whole, configured to preferably be applied on a two/three-wheel motorcycle, engaged with a drive shaft 2 which defines a rotation axis X.

The transmission device 1 comprises a first drive pulley 4, rotationally operated by the drive shaft 2 about said rotation axis X, and a second driven pulley (not depicted), which are connected to each other by a V-belt 6.

The drive pulley 4 consists of a first half-pulley 8 and a second half-pulley 10 provided with facing active surfaces 8a, 10a, respectively, having the shape of a truncated cone, sliding along said rotation axis X so as to juxtapose and move away the active surfaces 8a, 10a, and rotationally integral with each other.

The first half-pulley 8 in particular comprises
- a movable bushing 9, which carries the active surface 8a and provides a bushing 8b which is coaxial to the drive shaft 2, and
- a speed controller 12 comprising a container 14 supported by the movable bushing 9 and provided with a shaped seat 16 and a plurality of rollers 18 accommodated in seat 16.

The rollers create centrifugal masses which push the first half-pulley 8, and in particular the movable bushing 9, towards the second half-pulley 10 as the number of engine revolutions increases.

Thereby, the winding diameter of belt 6 on the drive pulley 4 increases and not being able to extend, such a belt operates to decrease the winding diameter on the driven pulley, thus increasing the gear ratio (high gear).

The drive pulley 4 further comprises a fixed bushing 11 having main extension along the rotation axis X coaxial to the drive shaft 2 and rotationally coupled therewith, for example by means of a grooved profile, so as to keep a secure position thereon. Preferably, the movable bushing 9 comprises a main wall 91, which is annular with respect to the rotation axis X, the main wall being defined between an inner cylindrical surface 91a and an outer surface 91b.

Preferably, the movable bushing 9 further comprises at least one projection 93 projecting radially outwards from the outer surface 91b and provided with a predefined axial extension. For example, there are provided three projections 93 arranged angularly equispaced from one another.

Said projections 93 engage container 14 so as to secure it to the movable bushing 9. Moreover, the movable bushing 9 comprises at least one driven cam portion 95, which is shaped so as to create surfaces which define a driven cam profile 97. Preferably, each driven cam portion 95 comprises a respective recess 99, which is lowered with respect to the outer surface 91b of the main wall 91; the fixed bushing 11 slidingly penetrates the recesses 99.

The fixed bushing 11 in turn has at least one drive cam portion 111, which is shaped so as to create surfaces which define a drive cam profile 113.

The drive cam portion 111 axially projects and is suitable for interpenetrating the movable bushing 9, namely such as to be inserted into the respective recess 99 of the driven cam portion 95 of the movable bushing 9.

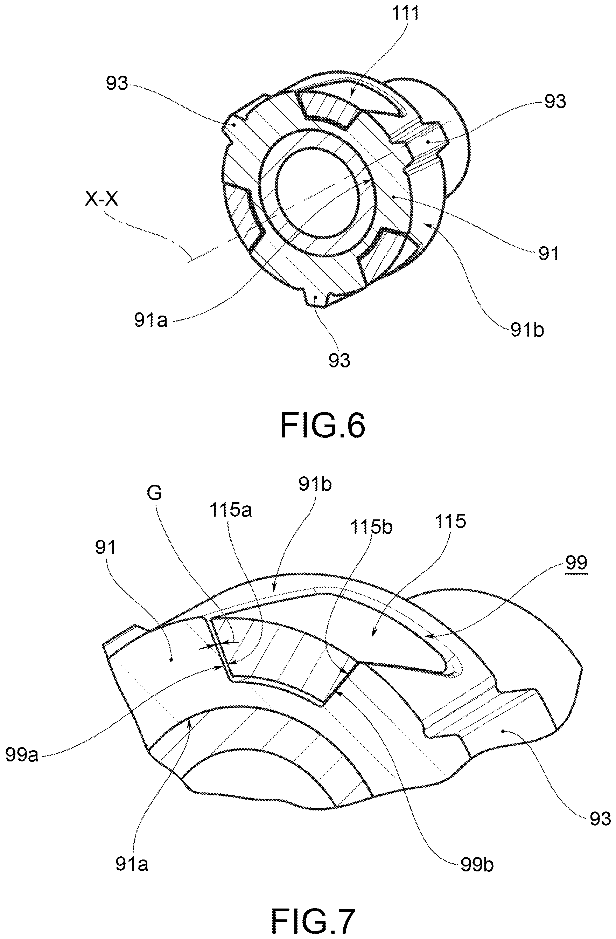

In particular, said drive cam portion 111 comprises a tooth 115 with mainly axial extension, which is slidingly inserted in recess 99 of the driven cam portion 95. Tooth 115 is delimited by lateral sides 115a, 115b which define the circumferential width thereof (figures 6 and 7).

Particulaly, the recess 99 and the tooth 115 have each other a complementary shape. Such complementary shape is kept in any movement of the tooth 115 with respect to the recess 99.

More particularly, recess 99 and tooth 115 have respective sides 99a, 99b; 115a, 115b which form a shape coupling with each other to guide the relative movement between the movable bushing 9 and said fixed bushing 11 so as to limit the noisiness.

Within the scope of the present description, shape coupling means a coupling between tooth and recess, in which the sides of the recess are both substantially in contact with each other. Said tooth and said recess are complementary each other, i.e. provided of shapes which match each other, unless there is a circumferential clearance which allows the mutual axial sliding thereof.

The relative movement between fixed bushing and movable bushing is of the rotary-translating type and therefore comprises an axial component along the axis of the bushings, and a circumferential component about the axis of the bushings. Dimensionally, the circumferential clearance G defined between the sides of the recess and the sides of the tooth in the coupled configuration is between 0.1 to 0.7 millimeters, preferably between 0.2 to 0.5 millimeters (figure 7).

Thereby, a coupling is obtained which ensures an increased operating reliability and accuracy.

In particular, the active side, which transmits the motion, is substantially in contact with the passive side. In other words, the present invention creates a cam-counter cam solution with a shape coupling between recess and tooth.

Advantageously, this allows lubrication and greasing between tooth and recess to be avoided, with subsequent manufacturing simplicity and affordability due to the absence of grease-oil seals.

Moreover, in the absence of said seals, the axial and radial volume of the device according to the invention advantageously is also particularly reduced, so as to allow the use also in particularly compact transmission systems.

Said lateral sides 115a, 115b each have - on an imaginary plane orthogonal to the main axis X - a cross-section with straight profile for contact with the respective faces of recess 97a. Correspondingly, said recess 99 has lateral sides 99a, 99b with straight profile.

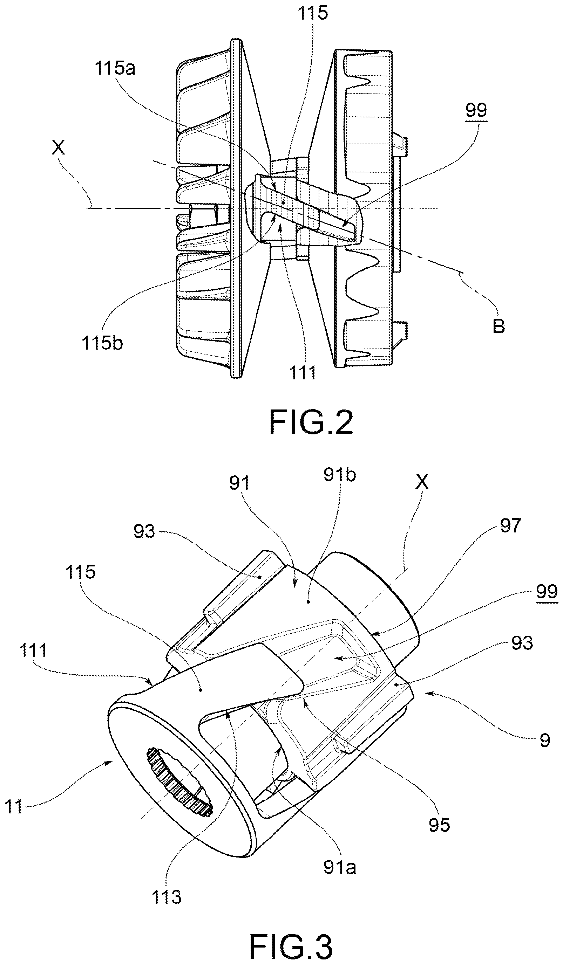

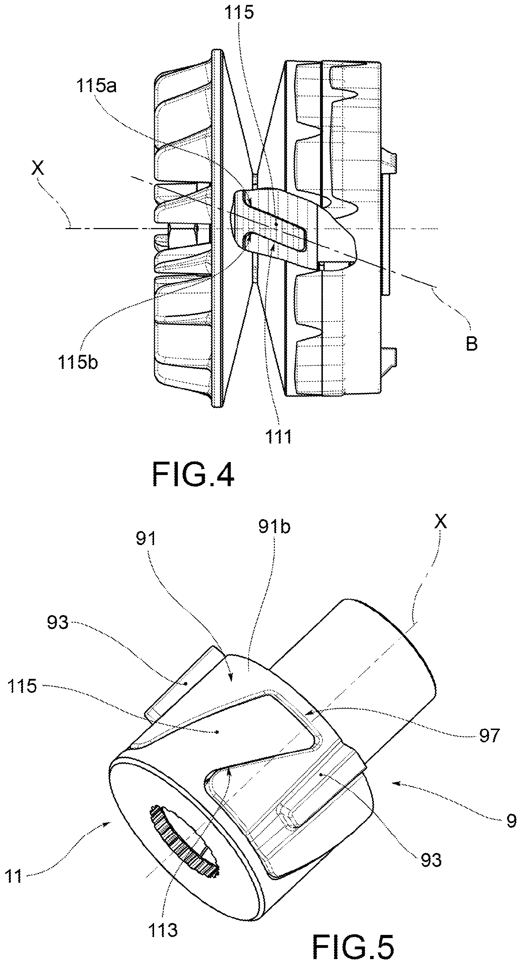

Tooth 115 axially extends along a substantially straight tooth axis B which is inclined with respect to the main axis X (figures 2 and 4).

Said lateral sides 115a, 115b of tooth 115 each have - on a further imaginary plane parallel to the main axis X - a cross-section with straight profile; said profiles are parallel to each other and parallel to the tooth axis B (figures 3 and 5). Correspondingly, said recess 99 has lateral sides 99a, 99b with straight profiles, which are parallel to each other and parallel to the tooth axis B.

Such a geometry of the tooth and of the recess allows particularly close circumferential contact surfaces to be made between tooth and recess under all conditions of use of the CVT device, thereby contributing to significantly limiting the noisiness of the device.

According to the invention, the lateral sides of the recess and the lateral sides of the tooth are permanently in contact to guide the relative movement between the movable bushing and the fixed bushing so that the noisiness is practically null because no impact occurs in the relative movement between the two bushings.

The transmission device 1 therefore comprises an operating cam system between the fixed bushing 11 and the movable bushing 9, comprising the driven cam portions 95 and the respective driven cam profiles 97, and the drive cam portions 111 and the respective drive cam profiles 113, which have a mutual rotary-translating movement. Said cam system is suitable for transmitting the rotation between fixed bushing 11 and movable bushing 9 and is configured to obstruct the juxtaposition between the active surfaces 8a, 10a.

In the normal operation of the transmission device 1, in case of active torque transmitted by the drive shaft, in case of request of an increased torque from a low gear, the cam system opposes an advancement of the active surface 8a of the first half-pulley 8 towards the active surface 10a of the second half-pulley 10, whereby the change is delayed and the behavior of the transmission device is more sporty with respect to a standard CVT.

In the case instead of braking torque transmitted by the drive shaft, for example in the case of request of a lower torque by the driver who releases the gas handle or brakes, or with vehicle descending, from a high gear the cam system facilitates the moving away of the active surface 8a of the first half-pulley 8 from the active surface 10a of the second half-pulley 10, whereby the passage to the low gear and therefore a significantly lower gear with respect to a standard CVT, is facilitated.

In particular, the Applicant has noted how the extremely reduced clearance that may be obtained between the sides of recess 99 and tooth 115 significantly contributes to reducing the noisiness of the CVT device.

Innovatively, the above-described transmission device allows the need mentioned to be met because it allows the driver's desire of having more or less torque to be satisfied and simultaneously it is capable of significantly reducing the noisiness of the CVT device.

Moreover, by conveniently shaping the profiles of the cam system, a transmission device may advantageously be designed which more or less abruptly meets a request for more or less torque.

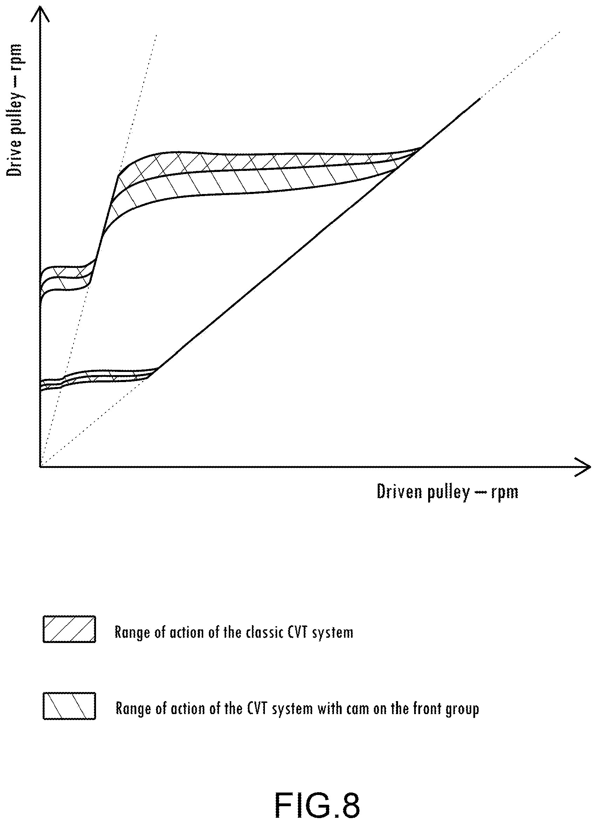

For example, figure 8 shows the engine revolutions of the drive pulley and of the driven pulley, for a traditional CVT transmission system and for a CVT transmission system according to the present invention. The latter clearly has increased hysteresis.

According to a further advantageous aspect, the device according to the invention can be mounted with significant ease.

## Claims

1. A continuous variation transmission device (1) for a motorcycle with two / three / four-wheels, connectable to a drive shaft (2), comprising
- a drive pulley (4) having an axis of rotation (X), provided with active surfaces (8a, 10a) for a V-belt (6), provided with a movable bushing (9) bearing one of said active surfaces (8a), said movable bushing (9) sliding axially under the action of rollers (18) of a speed controller (12) to obtain a change between a low gear and high gear;
- a fixed bushing (11) which can be fixed and is coaxial to the drive shaft (2);
- a cam system (95,111; 97,113) operating between the fixed bushing (11) and the movable bushing (9) suitable to transmit the rotation between the fixed bushing (11) and the movable bushing (9), configured to obstruct the juxtaposition between the active surfaces (8a, 10a), comprising at least a driven cam portion (95) of the movable bushing (9) and a drive cam portion (111) of the fixed bushing (11); wherein said driven cam portion (95) comprises at least one recess (99) and said drive cam portion (111) comprises at least one tooth (115) with mainly axial extension or vice versa, said tooth (115) sliding axially in said recess (99), and wherein said recess (99) and said tooth (115) are each other so shaped to be complementary in any relative movement for guiding the relative movement between said movable bushing (9) and said fixed bushing (11);
wherein the continuous variation transmission device (1) is **characterized in that** the recess (99) comprises lateral sides (99a, 99b) and the tooth (115) comprises lateral sides (115a, 115b) , which define the circumferential width of the tooth (115) and form a shape coupling with the lateral sides (99a, 99b) to guide the relative movement between the movable bushing (9) and the fixed bushing (11).

2. A transmission device according to claim 1, wherein between said lateral sides (115a, 115b) of the tooth (115) and said lateral sides (99a, 99b) of the recess (99) there is a circumferential clearance between 0.1 - 0.7 mm, preferably between 0.2 - 0.5 mm.

3. A transmission device according to claim 1 or 2, wherein, having defined an imaginary plane orthogonal to the axis of rotation (X), said lateral sides (115a, 115b) of the tooth (115) and said lateral sides (99a, 99b) of the recess (99) each have a cross-section with a straight profile.

4. A transmission device according to any one of the preceding claims, wherein the tooth (115) and the recess (99) extend along a substantially straight tooth axis (B) inclined with respect to the rotation axis (X).

5. A transmission device according to any one of the preceding claims, in which each point of said lateral sides (115a, 115b) of the tooth (115) and each point of said lateral sides (99a, 99b) of the recess (99) lies on a plane passing through the axis of rotation (X).

6. A transmission device according to any one of the preceding claims, wherein the movable bushing (9) supports a container (14) of the speed controller (12).

7. A transmission device according to any one of the preceding claims, wherein the movable bushing (9) comprises at least one axial projection (93) projecting radially outwards from an outer surface (91b), which engages the container (14) so as to secure it to the movable bushing (9).

## Patentansprüche

1. Kontinuierliche Variation-Übertragungsvorrichtung (1) für ein Motorrad mit zwei/drei/vier Rädern, welche mit einer Antriebswelle (2) verbindbar sind, umfassend:
- eine Antriebsscheibe (4), welche eine Rotationsachse (X) aufweist, welche mit aktiven Flächen (8a, 10a) für einen Keilriemen (6) bereitgestellt sind, welcher mit einer beweglichen Hülse (9) bereitgestellt ist, welche eine der aktiven Flächen (8a) trägt, wobei die bewegliche Hülse (9) unter der Einwirkung von Rollen (18) einer Geschwindigkeitssteuereinrichtung (12) axial gleitet, um einen Wechsel zwischen einem niedrigen Gang und einem hohen Gang zu erzielen;
- eine fixierte Hülse (11), welche an der Antriebswelle (2) fixiert werden kann und mit dieser koaxial ist;
- ein Nockensystem (95; 111; 97; 113), welches zwischen der fixierten Hülse (11) und der beweglichen Hülse (9) tätig ist und dazu geeignet ist, die Rotation zwischen der fixierten Hülse (11) und der beweglichen Hülse (9) zu übertragen, welche dazu eingerichtet ist, die Gegenüberstellung zwischen den aktiven Flächen (8a, 10a) zu versperren, umfassend wenigstens einen angetriebenen Nockenabschnitt (95) der beweglichen Hülse (9) und einen Antriebsnockenabschnitt (111) der fixierten Hülse (11);
wobei der angetriebene Nockenabschnitt (95) wenigstens eine Aussparung (99) umfasst und der Antriebsnockenabschnitt (111) wenigstens einen Zahn (115) mit hauptsächlich axialer Erstreckung umfasst, oder umgekehrt, wobei der Zahn (115) axial in die Aussparung (99) gleitet, und
wobei die Aussparung (99) und der Zahn (115) derart zueinander geformt sind, dass sie zum Führen der relativen Bewegung zwischen der beweglichen Hülse (9) und der fixierten Hülse (11) in jeglicher relativen Bewegung komplementär sind;
wobei die kontinuierliche Variation-Übertragungsvorrichtung (1) **dadurch gekennzeichnet ist, dass** die Aussparung (99) laterale Seiten (99a, 99b) umfasst und der Zahn (115) laterale Seiten (115a, 115b) umfasst, welche die Umfangsbreite des Zahns (115) definieren und mit den lateralen Seiten (99a, 99b) eine Formkopplung bilden, um die relative Bewegung zwischen der beweglichen Hülse (9) und der fixierten Hülse (11) zu führen.

2. Übertragungsvorrichtung nach Anspruch 1, wobei zwischen den lateralen Seiten (115a, 115b) des Zahns (115) und den lateralen Seiten (99a, 99b) der Aussparung (99) ein Umfangsspiel zwischen 0,1 - 0,7 mm, vorzugsweise zwischen 0,2 - 0,5 mm vorhanden ist.

3. Übertragungsvorrichtung nach Anspruch 1 oder 2, wobei, nach Definition einer imaginären Ebene, welche orthogonal zu der Rotationsachse (X) ist, die lateralen Seiten (115a, 115b) des Zahns (115) und die lateralen Seiten (99a, 99b) der Aussparung (99) jeweils einen Querschnitt mit einem geraden Profil aufweisen.

4. Übertragungsvorrichtung nach einem der vorhergehenden Ansprüche, wobei sich der Zahn (115) und die Aussparung (99) entlang einer im Wesentlichen geraden Zahnachse (B) erstrecken, welche in Bezug auf die Rotationsachse (X) geneigt ist.

5. Übertragungsvorrichtung nach einem der vorhergehenden Ansprüche, bei welcher jeder Punkt der lateralen Seiten (115a, 115b) des Zahns (115) und jeder Punkt der lateralen Seiten (99a, 99b) der Aussparung (99) in einer Ebene liegt, welche durch die Rotationsachse (X) verläuft.

6. Übertragungsvorrichtung nach einem der vorhergehenden Ansprüche, wobei die bewegliche Hülse (9) einen Behälter (14) der Geschwindigkeitssteuereinrichtung (12) haltert.

7. Übertragungsvorrichtung nach einem der vorhergehenden Ansprüche, wobei die bewegliche Hülse (9) wenigstens einen von einer äußeren Fläche (91b) radial nach Außen hervorstehenden axialen Vorsprung (93) umfasst, welcher derart mit dem Behälter (14) in Eingriff steht, dass er ihn an der beweglichen Hülse (9) sichert.

## Revendications

1. Dispositif de transmission à variation continue (1) pour une motocyclette à deux/trois/quatre roues, pouvant être relié à un arbre d'entraînement (2), comprenant
- une poulie d'entraînement (4) présentant un axe de rotation (X), dotée de surfaces actives (8a, 10a) pour une courroie en V (6), dotée d'une douille mobile (9) portant l'une desdites surfaces actives (8a), ladite douille mobile (9) coulissant axialement sous l'action de galets (18) d'un dispositif de commande de vitesse (12) pour obtenir un changement entre un rapport bas et un rapport haut ;
- une douille fixe (11) qui peut être fixée et est coaxiale à l'arbre d'entraînement (2) ;
- un système de came (95, 111 ; 97, 113) fonctionnant entre la douille fixe (11) et la douille mobile (9) approprié pour transmettre la rotation entre la douille fixe (11) et la douille mobile (9), configuré pour entraver la juxtaposition entre les surfaces actives (8a, 10a), comprenant au moins une partie came entraînée (95) de la douille mobile (9) et une partie came d'entraînement (111) de la douille fixe (11) ;
dans lequel ladite partie came entraînée (95) comprend au moins un évidement (99) et ladite partie came d'entraînement (111) comprend au moins une dent (115) avec une extension principalement axiale ou vice versa, ladite dent (115) coulissant axialement dans ledit évidement (99), et
dans lequel ledit évidement (99) et ladite dent (115) sont façonnés l'un par rapport à l'autre de manière à être complémentaires dans tout déplacement relatif pour guider le déplacement relatif entre ladite douille mobile (9) et ladite douille fixe (11) ;
dans lequel le dispositif de transmission à variation continue (1) est **caractérisé en ce que** l'évidement (99) comprend des côtés latéraux (99a, 99b) et la dent (115) comprend des côtés latéraux (115a, 115b), qui définissent la largeur circonférentielle de la dent (115) et forment un couplage de forme avec les côtés latéraux (99a, 99b) pour guider le déplacement relatif entre la douille mobile (9) et la douille fixe (11).

2. Dispositif de transmission selon la revendication 1, dans lequel entre lesdits côtés latéraux (115a, 115b) de la dent (115) et lesdits côtés latéraux (99a, 99b) de l'évidement (99) se trouve un dégagement circonférentiel entre 0,1 - 0,7 mm, de préférence entre 0,2 - 0,5 mm.

3. Dispositif de transmission selon la revendication 1 ou 2, dans lequel, ayant défini un plan imaginaire orthogonal à l'axe de rotation (X), lesdits côtés latéraux (115a, 115b) de la dent (115) et lesdits côtés latéraux (99a, 99b) de l'évidement (99) présentent chacun une section transversale avec un profil droit.

4. Dispositif de transmission selon l'une quelconque des revendications précédentes, dans lequel la dent (115) et l'évidement (99) s'étendent le long d'un axe de dent sensiblement droit (B) incliné par rapport à l'axe de rotation (X).

5. Dispositif de transmission selon l'une quelconque des revendications précédentes, dans lequel chaque point desdits côtés latéraux (115a, 115b) de la dent (115) et chaque point desdits côtés latéraux (99a, 99b) de l'évidement (99) se trouvent sur un plan traversant l'axe de rotation (X).

6. Dispositif de transmission selon l'une quelconque des revendications précédentes, dans lequel la douille mobile (9) supporte un contenant (14) du dispositif de commande de vitesse (12).

7. Dispositif de transmission selon l'une quelconque des revendications précédentes, dans lequel la douille mobile (9) comprend au moins une projection axiale (93) se projetant radialement vers l'extérieur depuis une surface extérieure (91b), qui vient en prise avec le contenant (14) de manière à l'immobiliser sur la douille mobile (9).
